# EUROPÄISCHE PATENTSCHRIFT

(11) **EP 1 456 753 B1**
(45) Veröffentlichungstag und Bekanntmachung des Hinweises auf die Patenterteilung: **25.04.2007**
(21) Anmeldenummer: 02794958.5
(22) Anmeldetag: 28.11.2002
(51) Int. Cl.: G06F 9/44

(54) **SYSTEM UND VERFAHREN ZUR MODELLIERUNG UND/ODER REALISIERUNG VON SOFTWAREANWENDUNGEN, INSBESONDERE MES-ANWENDUNGEN**
SYSTEM AND METHOD FOR MODELLING AND/OR EXECUTING SOFTWARE APPLICATIONS, ESPECIALLY MES APPLICATIONS
SYSTEME ET PROCEDE DE MODELISATION ET/OU DE REALISATION D'APPLICATIONS LOGICIEL, NOTAMMENT D'APPLICATIONS MES

(30) Priorität: 12.12.2001 DE 10161114
(43) Veröffentlichungstag der Anmeldung: 15.09.2004
(73) Patentinhaber: SIEMENS AKTIENGESELLSCHAFT, 80333 München (DE)
(72) Erfinder: THURNER, Elmar, 90491 Nürnberg (DE); PFANDER, Gotthard, 91056 Erlangen (DE)
(86) Internationale Anmeldenummer: PCT/DE2002/004378
(87) Internationale Veröffentlichungsnummer: WO 2003/050677

(56) Entgegenhaltungen:
- EP-A- 0 910 000
- EP-A- 1 134 636
- US-A- 5 631 825
- US-A- 5 862 381
- ZWINGE P: "OBJEKTORIENTIERTES PROGRAMMIEREN UND VISUALISIEREN VON AUTOMATISIERUNGSSYSTEMEN" , AUTOMATISIERUNGSTECHNISCHE PRAXIS - ATP, OLDENBOURG VERLAG. MUNCHEN, DE, VOL. 33, NR. 9, PAGE(S) 485-490 XP000264961 ISSN: 0178-2320 Absätze [0003],[0004]; Abbildungen 5-9

## Beschreibung

Die Erfindung betrifft ein System zur Modellierung und/oder Realisierung von Softwareanwendungen, insbesondere MES-Anwendungen, mit mindestens einer Rechnereinheit und mit mindestens einer Anzeigevorrichtung.

Des Weiteren betrifft die Erfindung ein diesbezügliches Verfahren, ein Computerprogramm, einen Datenträger und eine Datenverarbeitungseinrichtung.

Aus "Software für die Automatisierung - Transparenz über die Abläufe schaffen", Artikel von Dirk Kozian in Elektronik für die Automatisierung 11, 17.11.1999 ist bekannt, für die Automatisierung von Produktions- bzw. Fertigungsabläufen so genannte Manufacturing Execution Systems (MES) einzusetzen. Diese Systeme integrieren die Automatisierungsebene (Controls) mit den ERP-Systemen (ERP: Enterprise Resource Planning) der Unternehmensleitebene. Manufacturing Execution Systems sind Systeme, die z.B. Informationen zur Optimierung von Produktionsabläufen bereitstellen. Zum einen müssen die Manufacturing Execution Systems die groben Planungsdaten der ERP-Systeme um anlagenspezifische und aktuelle Feinplanungsdaten ergänzen und diese entsprechend an die unterlagerte Automatisierungsebene weiterleiten, zum anderen haben sie die Aufgabe, aus der Automatisierungsebene produktionsrelevante Informationen zu übernehmen, diese aufzubereiten und an die Unternehmensleitebene weiterzumelden. MES-Systeme erfüllen somit die Aufgabe einer vertikalen Integration zwischen der Unternehmensleitebene und der Automatisierungsebene. Typische Einzelaufgaben von MES-Systemen sind Enterprise Asset Management, Maintenance Management, Information Management, Scheduling, Dispatching und Trace & Track. Diese Aufgaben werden jeweils von MES-Komponenten bzw. MES-Applikationen ausgeführt.

Aus "Communicating and Mobile Systems: the π-Calculus", Robin Milner, Cambridge University Press, 1999 ist es bekannt für die Modellierung von Kommunikationssystemen asynchron kooperierende State Machines einzusetzen.

Aus EP 1 134 636 ist ein Editor zur Erstellung von Prozessplänen bekannt. Hierbei werden Prozesspläne mithilfe von Regeln durch Verknüpfung von Prozesszielen gebildet. Gebildete Prozesspläne werden überprüft und in Abhängigkeit von der U-berprüfung ist eine Freigabemeldung aktivierbar.

Aufgabe der vorliegenden Erfindung ist es, ein System und ein Verfahren zur Projektierung von Lösungen für Aufgaben im MES-Bereich, zur Verfügung zu stellen, bei dem eine asynchrone Kommunikation zwischen einzelnen Softwareanwendungen auf einfache Weise ermöglicht wird.

Gemäß der Erfindung wird die oben genannte Aufgabe für ein System durch die Merkmale des Anspruchs 1 gelöst. Insbesondere im MES-Umfeld arbeiten die Anwendungen bzw. Teilkomponenten meistens autark und (für sich) synchron nebeneinander, kommunizieren aber asynchron miteinander. Die Erfinder sind deswegen von der Erkenntnis ausgegangen, dass sich MES-Anwendungen und Lösungen für MES-Systeme sehr elegant durch asynchron kooperierende State Machines darstellen bzw. realisieren lassen, wobei die State Machines durch Activity-Diagramme beschrieben bzw. modelliert sind. Dadurch, dass die Teileinheiten asynchron miteinander kommunizieren, können sie unabhängig voneinander modelliert und realisiert werden, ohne die Formulierung von Synchronitätsbedingungen. Teileinheiten können z.B. einfache oder auch komplexe Geschäftsprozesse sein (z.B. Auftragsabwicklung, Auftragsüberwachung etc.). Die modellierten State Machines bzw. Ablaufautomaten sind außerdem mit ihren Verschaltungen sofort ablauffähig und testbar.

Im Entwicklungsprozess ist somit kein "Design-Bruch" vorhanden. Die Modellierung der Verschaltungen zwischen den Ablaufautomaten kann ein Anwender sehr elegant und effektiv durchführen. Entweder durch die grafische Verbindung von Knoten in einem Datenfluß-Diagramm über grafische Eingabehilfsmittel (z.B. Mouse und Drag&Drop-Mechanismus) oder über Projektiermasken, mit denen die Kommunikationselemente der Activity-Diagramme hinterlegt sind. Die Erfindung bietet somit ein integriertes Editier- und Laufzeitsystem. Ein Anwender kann seine Lösungen projektieren und muss nicht aufwendig Programme schreiben. Dadurch wird die Effizienz des Anwenders (insb. Systemintegrator oder Entwickler) erhöht.

Außerdem ermöglicht das erfindungsgemäße System die Modellierung und Realisierung von in MES-Systemen üblichen Geschäftsprozessen (z.B. Auftragsabwicklung etc.) in unabhängigen softwaretechnischen Teileinheiten, deren Realisierung bisher nur als ein festes sequentielles Programm möglich war.

Eine erste vorteilhafte Ausgestaltung der vorliegenden Erfindung für ein System liegt darin, dass die Realisierung der Verschaltungen in einem Rahmenprogramm mit Kommunikationsmitteln erfolgt. Durch den Einsatz eines Frameworks (Rahmenprogramms) unter Verwendung von standardisierten Schnittstellen wie OPC (OLE for Process Control), ActiveX, XML (eXtensible Markup Language) oder Protokollen wie z.B.SOAP (Simple Object Access Protocol) wird eine Interoperabilität zwischen Teileinheiten (z.B. MES-Applikationen) sehr leicht und effektiv ermöglicht. Ein Anwender kann beim Verschalten von den zugrundeliegenden Kommunikationsmitteln abstrahieren. Durch die Unabhängigkeit von den zugrundeliegenden Kommunikationsmittel, z.B. HTTP (Hyper Text Transfer Protocol, COM, (Component Object Model), DCOM (Distributed Component Object Model), MSMQ (Microsoft Message Queue) muss sich ein Anwender beim Projektieren der Verschaltungen nicht um Implementierungsdetails kümmern.

Eine weitere vorteilhafte Ausgestaltung der vorliegenden Erfindung für ein System liegt darin, dass die Activity-Diagramme Zustandslogik und/oder Controlllogik und/oder Unterprogramme und Mittel zur asynchronen Kommunikation enthalten. Dadurch wird die Mächtigkeit eines Anwenders bezüglich seiner Beschreibungs- und Modellierungsmöglichkeiten erhöht. Ein Anwender kann z.B. durch die Unterprogrammtechnik seine Modelle schrittweise verfeinern. Außerdem kann ein Anwender im Ablaufdiagramm Abfragen und Warte- bzw. Synchronisationspunkte definieren.

Eine weitere vorteilhafte Ausgestaltung der vorliegenden Erfindung für ein System liegt darin, dass die State Machines auf einen oder mehrere Rechner aufteilbar sind. Dadurch kann ein Anwender explizit ein so genanntes "Deployment" vornehmen, d.h. er kann auf die Last- und Ortsverteilung der State Machines einwirken.

Eine weitere vorteilhafte Ausgestaltung der vorliegenden Erfindung für ein System liegt darin, dass durch Wrapper und/oder Adapter Fremdsysteme ankoppelbar sind. Adapter- und Wrappertechnologien sind in der Informationstechnologie bekannte Mechanismen, um Softwarekomponenten in ein System zu integrieren. Ein Wrapper bildet das API (Application Programmable Interface) einer Fremdkomponente (z.B. eine MES-Applikation eines Drittanbieters) in das Objektmodell des Rahmenprogramms ab. So wird z.B. aus einer Methode des API der Fremdkomponente eine Methode des Rahmenprogramms bzw. aus einem Integer-Datentyp des API der Fremdkomponente wird ein Integer-Datentyp des Rahmenprogramms, usw. Für COM-Objekte (Component Object Model) ist die Erstellung eines Wrappers für eine zu integrierende Komponente automatisierbar. Ein Wrapper entspricht einer Bridge. Wrapper lassen sich sehr schnell realisieren.

Adapter sind eine Abstraktionsstufe höher als Wrapper. Sie bieten eine einheitliche Sicht auf angekoppelte Applikationen. Ein Adapter bietet Funktionalität, um die anzukoppelnde Komponente zu starten, zu bedienen etc. Ein Adapter entspricht in der Sprache der Design Patterns einer "Facade".

Gemäß der Erfindung wird die oben genannte Aufgabe für ein Verfahren durch die Merkmale des Anspruchs 8 gelöst. Dadurch, dass die Teileinheiten asynchron miteinander kommunizieren, können sie unabhängig voneinander modelliert und realisiert werden, ohne die Formulierung von Synchronitätsbedingungen. Die modellierten State Machines bzw. Ablaufautomaten sind außerdem mit ihren Verschaltungen sofort ablauffähig und testbar. Im Entwicklungsprozess ist somit kein "Design-Bruch" vorhanden. Die Modellierung der Verschaltungen zwischen den Ablaufautomaten kann ein Anwender sehr elegant und effektiv durchführen. Entweder durch die grafische Verbindung von Knoten in einem Datenfluss-Diagramm über grafische Eingabehilfsmittel (z.B. Mouse und Drag&Drop-Mechanismus) oder über Projektiermasken, mit denen die Kommunikationselemente der Activity-Diagramme hinterlegt sind. Die Erfindung bietet somit ein integriertes Editier- und Laufzeitsystem. Ein Anwender kann seine Lösungen projektieren und muss nicht aufwendig Programme schreiben. Dadurch wird die Effizienz des Anwenders (insb. Systemintegrator oder Entwickler) erhöht.

Außerdem ermöglicht das erfindungsgemäße System die Modellierung und Realisierung von in MES-Systemen üblichen Geschäftsprozessen (z.B. Auftragsabwicklung etc.) in unabhängigen softwaretechnischen Teileinheiten, deren Realisierung bisher nur als ein festes sequentielles Programm möglich war.

Eine erste vorteilhafte Ausgestaltung der vorliegenden Erfindung für ein Verfahren liegt darin, dass die Realisierung der Verschaltungen in einem Rahmenprogramm mit Kommunikationsmitteln erfolgt. Durch den Einsatz eines Frameworks (Rahmenprogramms) unter Verwendung von standardisierten Schnittstellen wie OPC (OLE for Process Control), ActiveX, XML (eXtensible Markup Language) oder Protokollen wie z.B.SOAP (Simple Object Access Protocol) wird eine Interoperabilität zwischen Teileinheiten (z.B. MES-Applikationen) sehr leicht und effektiv ermöglicht. Ein Anwender kann beim Verschalten von den zugrundeliegenden Kommunikationsmitteln abstrahieren. Durch die Unabhängigkeit von den zugrundeliegenden Kommunikationsmittel, z.B. HTTP (Hyper Text Transfer Protocol, COM, (Component Object Model), DCOM (Distributed Component Object Model), MSMQ (Microsoft Message Queue) muss sich ein Anwender beim Projektieren der Verschaltungen nicht um Implementierungsdetails kümmern.

Eine weitere vorteilhafte Ausgestaltung der vorliegenden Erfindung für ein Verfahren liegt darin, dass die Activity-Diagramme Zustandslogik und/oder Controlllogik und/oder Mittel für Verfeinerungen und/oder Mittel zur asynchronen Kommunikation enthalten. Dadurch wird die Mächtigkeit eines Anwenders bezüglich seiner Beschreibungs- und Modellierungsmöglichkeiten erhöht. Ein Anwender kann z.B. durch die Unterprogrammtechnik seine Modelle schrittweise verfeinern. Außerdem kann ein Anwender im Ablaufdiagramm Abfragen und Warte- bzw. Synchronisationspunkte definieren.

Eine weitere vorteilhafte Ausgestaltung der vorliegenden Erfindung für ein Verfahren liegt darin, dass die State Machines auf einen oder mehrere Rechner aufgeteilt werden. Dadurch kann ein Anwender explizit ein so genanntes "Deployment" vornehmen, d.h. er kann auf die Last- und Ortsverteilung der State Machines einwirken.

Eine weitere vorteilhafte Ausgestaltung der vorliegenden Erfindung für ein Verfahren liegt darin, dass durch Wrapper und/oder Adapter Fremdsysteme integriert werden. Adapter- und Wrappertechnologien sind in der Informationstechnologie bekannte Mechanismen, um Softwarekomponenten in ein System zu integrieren. Ein Wrapper bildet das API (Application Programmable Interface) einer Fremdkomponente (z.B. eine MES-Applikation eines Drittanbieters) in das Objektmodell des Rahmenprogramms ab. So wird z.B. aus einer Methode des API der Fremdkomponente eine Methode des Rahmenprogramms bzw. aus einem Integer-Datentyp des API der Fremdkomponente wird ein Integer-Datentyp des Rahmenprogramms, usw. Für COM-Objekte (Component Object Model) ist die Erstellung eines Wrappers für eine zu integrierende Komponente automatisierbar. Ein Wrapper entspricht einer Bridge. Wrapper lassen sich sehr schnell realisieren.

Adapter sind eine Abstraktionsstufe höher als Wrapper. Sie bieten eine einheitliche Sicht auf angekoppelte Applikationen. Ein Adapter bietet Funktionalität, um die anzukoppelnde Komponente zu starten, zu bedienen etc. Ein Adapter entspricht in der Sprache der Design Patterns einer "Facade".

Eine weitere vorteilhafte Ausgestaltung der vorliegenden Erfindung liegt darin, dass das erfindungsgemäße Verfahren durch ein Computerprogramm implementiert ist. Dadurch können eventuelle Modifizierungen bzw. Anpassungen leicht durchgeführt werden.

Eine weitere vorteilhafte Ausgestaltung der vorliegenden Erfindung liegt darin, dass das Computerprogramm für das erfindungsgemäße Verfahren auf einem Datenträger gespeichert ist. Dadurch ist das Verfahren bezüglich der Logistik und Verteilung leicht handhabbar. Datenträger sind z.B. übliche Computerprogrammprodukte wie z.B. Disketten oder CDs.

Eine weitere vorteilhafte Ausgestaltung der vorliegenden Erfindung liegt darin, dass das Computerprogramm für das erfindungsgemäße Verfahren auf einer Datenverarbeitungseinrichtung installiert ist. Dadurch wird die Performance erhöht.

Weitere Vorteile und Details der Erfindung ergeben sich anhand der nun folgenden Beschreibung vorteilhafter Ausführungsbeispiele und in Verbindung mit den Figuren. Soweit in unterschiedlichen Figuren Elemente mit gleichen Funktionalitäten beschrieben sind, sind diese mit gleichen Bezugszeichen gekennzeichnet. Es zeigen:
- FIG 1: in einer prinzipiellen Übersichtsdarstellung die "Unternehmenspyramide" mit drei Steuerungsebenen,
- FIG 2: ein beispielhaftes Übersichtsbild mit Software- und Hardwareeinheiten für MES-Lösungen,
- FIG 3: ein Beispiel einer State Machine,
- FIG 4: ein Beispiel für die Kooperation von State Machines,
- FIG 5: die Aufteilung einer MES-Anwendung in unabhängig laufende Teileinheiten und
- FIG 6: eine Projektieroberfläche für Activity-Diagramme.

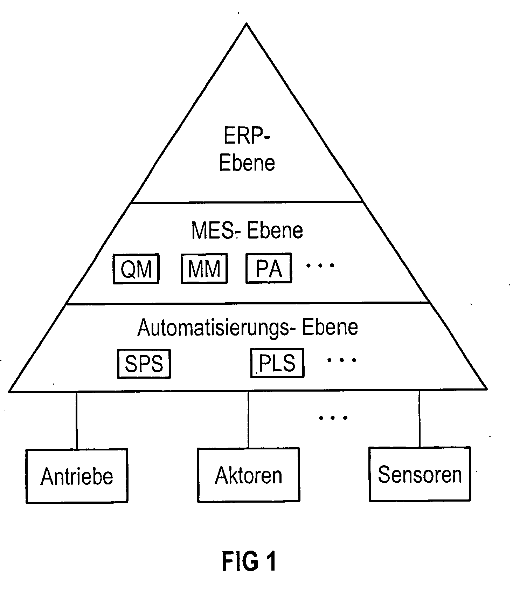

Die Darstellung gemäß FIG 1 zeigt in einer prinzipiellen Übersichtsdarstellung die drei Steuerungsebenen, wie sie üblicherweise in einem produzierenden bzw. fertigenden Unternehmen zu finden sind. Durch die Pyramidenform wird ausgedrückt, dass nach oben hin eine Verdichtung der Informationen stattfindet. Die oberste Ebene ist die ERP-Ebene (Enterprise Ressource Planning. Auf dieser Unternehmensleitebene werden üblicherweise die betriebswirtschaftlichen und vertrieblichen Aufgaben in einem Unternehmen durchgeführt (z.B. Finanzwesen, Vertriebswesen, Personalwesen, Berichterstattung). Aber auch produktionsanlagenübergreifende logistische Aufgaben (z.B. Auftrags- und Materialverwaltung) werden auf dieser Ebene durchgeführt. Das System SAP R/3 ist ein ERP-System, das auf der Unternehmensleitebene sehr häufig verwendet wird.

Die unterste Ebene der Pyramide ist die Automatisierungs-Ebene (Controls). Auf dieser Ebene kommen üblicherweise speicherprogrammierbare Steuerungen (SPS) in Verbindung mit Visualisierungs- und Prozessleitsystemen (PLS) zum Einsatz. Die Antriebe, Aktoren und Sensoren der Produktions- und/oder Fertigungseinrichtungen stehen direkt mit den Systemen dieser Ebene in Verbindung.

Das Verbindungsglied zwischen der ERP-Ebene und der Automatisierungs-Ebene wird durch die MES-Ebene gebildet. Die Applikationen der MES-Ebene sorgen somit für eine vertikale Integration zwischen der ERP-Ebene und der Automatisierungs-Ebene. Die MES-Applikationen müssen einerseits die Grobplanungen der ERP-Systeme um produktionsanlagenspezifische Feinplanungen ergänzen und an die Systeme der Automatisierungs-Ebene weiterleiten, andererseits ist es Aufgabe der MES-Applikationen produktionsrelevante Daten der Automatisierungs-Ebene aufzunehmen, aufzubereiten und an die ERP-Ebene (Unternehmensleitebene) weiterzuleiten.

Typische MES-Applikationen sind u.a. Quality Management (QM), Maintenance Management (MM), Performance Analysis (PA), Process Management, Labor Management, Asset Management. Durch jeweils drei Punkte wird in FIG 1 ausgedrückt, dass sich auf einer Ebene weitere Elemente (Applikationen, Systeme etc.) befinden können.

MES-Systeme bzw. ERP-Systeme enthalten in der Regel ein so genanntes Laufzeitsystem zur zeitlichen Ablaufsteuerung der beteiligten Komponenten (Teilkomponenten, Module, Tasks, Prozesse des Betriebssystems etc.), sowie ein so genanntes Engineeringsystem zum Erstellen und Editieren von Programmen, welche zur Ausführung im Laufzeitsystem vorgesehen sind.

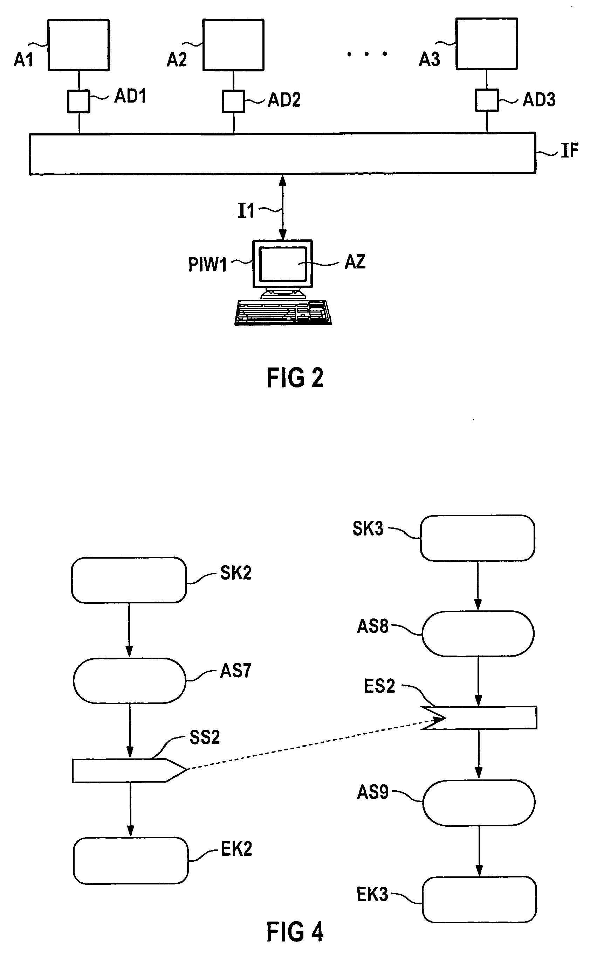

Die Darstellung gemäß FIG 2 zeigt ein beispielhaftes Übersichtsbild mit Software- und Hardwareeinheiten für MES-Lösungen. Die einzelnen MES-Applikationen A1 bis A3 sind über Adapter AD1 bis AD3 mit einem Rahmenprogramm (Framework) IF verbunden. Über einen bidirektionalen Informationspfad I1 ist ein Benutzerarbeitsplatz PIW1 mit dem Rahmenprogramm IF gekoppelt und kann somit die daran hängenden bzw. integrierten MES-Applikationen verwalten und überwachen. Der Benutzerarbeitsplatz PIW1 besteht üblicherweise aus einer Anzeigevorrichtung (Monitor, Display, etc.), einer Datenverarbeitungsanlage (z.B. PC) mit Prozessor und Speichereinrichtungen sowie Eingabeeinheiten (Keyboard, Maus, etc.). Die MES-Applikationen A1 bis A3 sowie das Rahmenprogramm IF können auf eigenen Datenverarbeitungseinheiten bzw. Prozessoren ablaufen, es ist aber auch möglich, dass sie auf der Datenverarbeitungseinheit des PIW1 ablaufen.

Über Adapter AD1 bis AD3 sind die jeweiligen MES-Applikationen A1 bis A3 mit dem Rahmenprogramm IF verbunden. Die Verbindung zwischen den Adaptern AD1 - AD3 mit dem Rahmenprogramm IF geschieht über geeignete Datenformate (z.B. XML), geeignete Protokolle (XOP, OPC, etc.) und geeignete Transportmechanismen (z.B. DCOM oder MSMQ). Auch HTTP (Hyper Text Transfer Protocol) kann hierbei verwendet werden. Auch das auf XML eXtensible Markup Language) beruhende Protokoll SOAP (Simple Object Access Protocol) kann für die Integration der Adapter AD1 - AD3 an das Rahmenprogramm IF verwendet werden.

Die Adapter sind somit die Koppelbausteine zwischen dem Rahmenprogramm IF und den Applikationen. Über die Adapter können somit auch an sich heterogene Applikationen miteinander verbunden werden, und durch die Integration mit dem Rahmenprogramm IF ist es möglich, zwischen den Applikationen zu kommunizieren und Datenaustausch zu betreiben. Die Adapter sind Softwaremodule, die Verbindungen zu verschiedenen Anwendungen bzw. Applikationen herstellen. In typischen Integrationsszenarien sind dies Integrationen zu Systemen aus der MES-, ERP-, SCADA- oder Controls-Welt. Ein Adapter bietet Funktionalität, um eine anzukoppelnde Komponente zu starten, zu bedienen, etc. Ein Adapter erlaubt den Zugriff auf Daten und Funktionen der anzukoppelnden Anwendung bzw. Applikation, stellt bestimmte Laufzeitdaten zur Verfügung und erlaubt das Laden von Engineeringinformationen aus der anzukoppelnden Anwendung bzw. Applikation. Adapter können sich hinsichtlich ihres Aufbaus und Umfangs unterscheiden. So können Adapter z.B. fest programmiert sein oder sie können konfiguriert bzw. modelliert werden. Auch bezüglich der Möglichkeiten des Zugriffs auf die anzukoppelnde Applikation können sie sich unterscheiden, so können z.B. Adapter nur einen datentechnischen Zugang gestatten, es ist aber auch möglich, dass Adapter einen Zugang auf höherwertige Geschäftsabläufe zulassen. Beim Hochfahren werden die Adapter mit den hinterlegten Modellen und Zustandsinformationen geladen. Zur Laufzeit wird dann überprüft, ob und wie die unterschiedlichen integrierten Applikationen bzw. Anwendungen zusammenpassen. Über eine Visualisierungs- bzw. Monitoringkomponente ist es möglich, den Status eines Adapters abzufragen und am Benutzerarbeitsplatz PIW1 darzustellen (auch graphisch). Durch Adapter erhält das System und auch der Anwender eine standardisierte und einheitliche Sicht auf Applikationen (je nachdem, welche Abstraktionsebene bei den Adaptern vorhanden ist).

Eine weitere Möglichkeit Softwarekomponenten zu integrieren, ist es, Wrapper einzusetzen. Ein Wrapper bildet das API (Application Programmable Interface) einer Fremdkomponente (z.B. eine MES-Applikation) in das Objektmodell des Rahmenprogrammes ab. So wird z.B. aus einer Methode des API der Fremdkomponente eine Methode des Rahmenprogramms bzw. aus einem Integer-Datentyp des API der Fremdkomponente wird ein Integer-Datentyp des Rahmenprogramms.

Neben MES-Applikationen können auch Applikationen aus der Unternehmensleitebene (Enterprise Resource Planning-Ebene) und/aus der Automatisierungsebene (Controls-Ebene) über das Rahmenprogramm IF integriert werden und über den Arbeitsplatz PIW1 (das Acronym PIW steht für Personalized Industrial Workplace) überwacht bzw. verwaltet werden. Das Rahmenprogramm IF bildet somit eine Integrationsplattform für den gesamten industriellen Bereich. Unterschiedliche Applikationen aus der Unternehmensleitebene, der MES-Ebene und der Automatisierungsebene lassen sich durch das Rahmenprogramm IF einfach und wirtschaftlich mit Hilfe von Adaptern und/oder Wrappern integrieren. Das Rahmenprogramm IF ist somit als Middleware-Plattform und als Manufacturing Application Integration-Werkzeug anzusehen. Über den Arbeitsplatz PIW1 kann ein Benutzer (z.B. der Anlagenfahrer) die jeweiligen Zustände der zu überwachenden Applikationen sehen, und er kann auch auf Daten und auf Methoden der Applikationen zugreifen, und weiterhin kann er durch diesen Zugriff Applikationen miteinander in Verbindung setzen.

Das Rahmenprogramm IF ermöglicht es somit, zum einen eine vertikale Integration von Applikationen aus unterschiedlichen Unternehmensebenen zu erreichen und zum anderen ermöglicht das Rahmenprogramm IF eine horizontale Integration von Applikationen der MES-Ebene. Im Rahmenprogramm IF wird der Informationsaustausch von Komponenten untereinander über gängige Datenformate (z.B. XML), gängige Protokolle (XOP, OPC, etc.) und gängige Transportmechanismen (z.B. DCOM, HTTP oder MSMQ) realisiert.

Der Arbeitsplatz PIW1 stellt für einen Benutzer an der Frontendseite von MES-Applikationen oder anderen Applikationen aus dem Unternehmen ein "One Window to the World" dar. Das heißt, der Arbeitsplatz ermöglicht, über eine gemeinsame einheitliche Oberfläche einen integrativen Zugang auf unterschiedliche, auch heterogene Anwendungen im Unternehmen. Der Benutzer des Arbeitsplatzes PIW1 kann somit von diesem einen Arbeitsplatz aus alle integrierten MES- oder anderen Anwendungen überwachen und verwalten. Dieser Arbeitsplatz kann über das Internet, das Intranet, LAN (Local Area Network) oder andere denkbare Verbindungen mit den Applikationen verbunden sein. Es ist auch möglich, diesen Arbeitsplatz als mobile Station, z.B. als mobiles Endgerät (PDA, Handy) auszugestalten. Diese Mobilität würde für einen Benutzer noch weitere Vorteile bringen. Der Arbeitsplatz PIW1 enthält weiterhin Eingabehilfsmittel und eine oder mehrere Anzeigevorrichtungen AZ (z.B. Display oder Monitor).

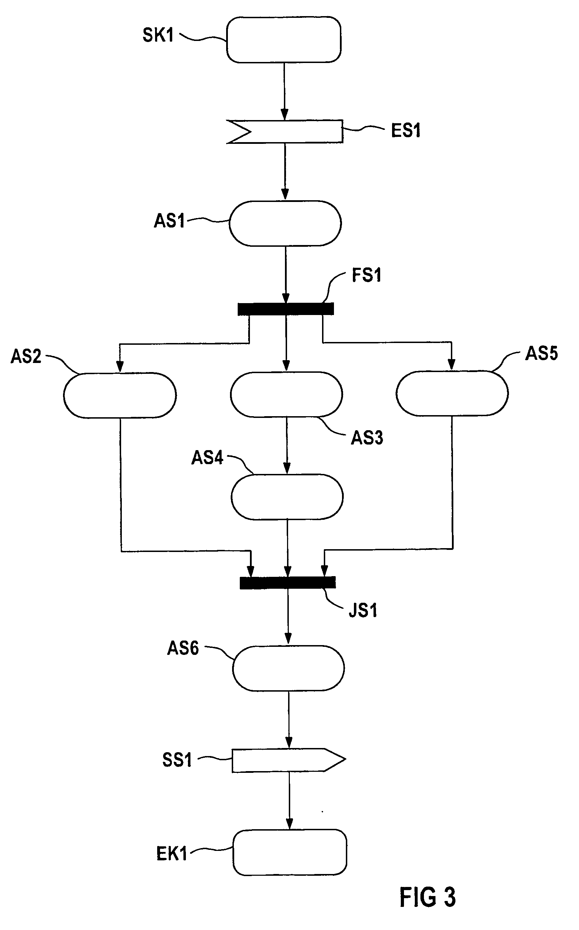

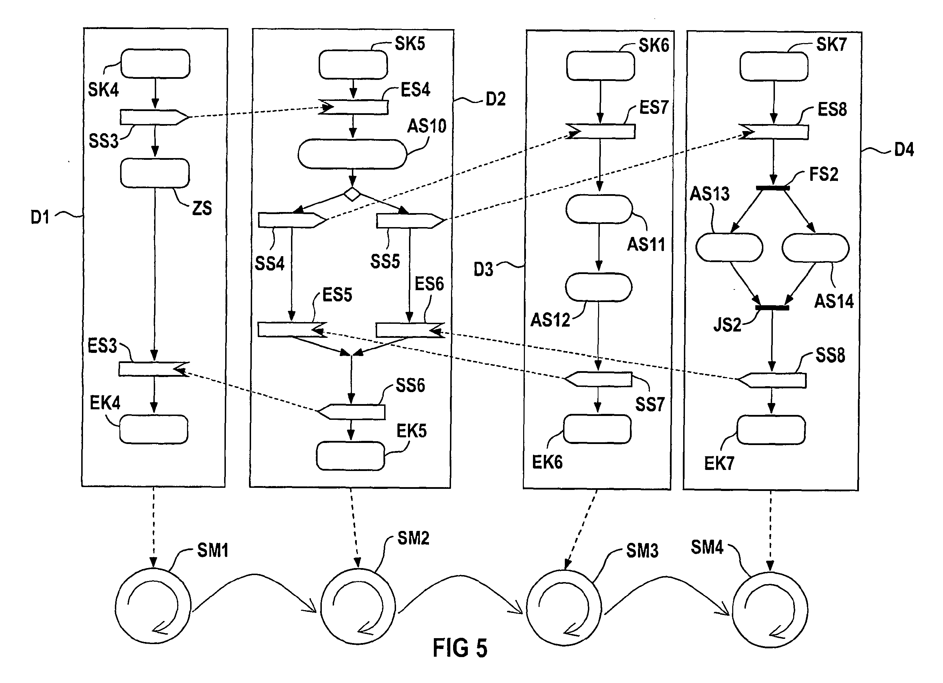

Die Darstellung gemäß FIG 3 zeigt ein Beispiel einer State Machine. State Machines (SM1 - SM4; FIG 5) werden durch so genannte Activity-Diagramme (D1 - D4; FIG 5) modelliert, die das Verhalten einer State Machine beschreiben. In einem Activity-Diagramm wird ein sequentieller Ablauf beschrieben, der bei einem Startknoten SK1 beginnt und beim Endknoten EK1 endet. Der Programmablauf selbst wird in der Vertikalen von oben nach unten mit Hilfe von Symbolen, die durch Pfeile miteinander verbunden sind, beschrieben. Der Programmablauf selbst folgt von Symbol zu Symbol entlang der Pfeile. In FIG 3 folgt auf den Startknoten SK1 das Empfangssymbol ES1. Liegt für ein Empfangssymbol ES1 eine Nachricht vor, dann wird im Programmablauf fortgefahren, ansonsten wird im Programmablauf solange gewartet, bis eine Nachricht für das Empfangssymbol ES1 eintrifft. Nach dem Empfangssymbol ES1 folgt als nächstes Symbol das Activity-Symbol AS1. Stößt der Programmablauf auf ein Activity-Symbol, dann werden Tätigkeiten ausgeführt, die hinter dem Activity-Symbol hinterlegt sind (z.B. ein Aufruf eines Unterprogramms, Methodenaufrufe etc). In den meisten Fällen werden Skripts ausgeführt, z.B. Visual-Basic-Skripts. Das nächste Symbol im Programmablauf von FIG 3 ist ein Fork-Symbol FS1, dargestellt durch einen waagrechten Balken. Zu jedem Fork-Symbol gibt es ein assoziiertes Joint-Symbol, ebenfalls dargestellt durch einen waagrechten Balken. In FIG 3 ist das das Joint-Symbol JS1. Durch ein Fork-Symbol werden parallele Äste mit parallelen Abläufen aufgespannt, die dann im dazugehörigen Joint-Symbol aufeinander warten. In der Darstellung nach FIG 3 werden durch das Fork-Symbol FS1 drei parallele Äste aufgespannt. Der linke Ast beinhaltet nur das Activity-Symbol AS2, der rechte Ast beinhaltet nur das Activity-Symbol AS5 und der mittlere Ast beinhaltet die beiden Activity-Symbole AS3 und AS4. Durch die Activity-Symbole ist dargestellt, dass Tätigkeiten ausgeführt werden. Wenn nun die Tätigkeiten aller drei Äste beendet sind, dann wird im Programmablauf mit dem auf das Joint-Symbol JS1 folgende Symbol, in FIG 3 das Activity-Symbol AS6, fortgefahren. Nach dem Ausführen der mit dem Activity-Symbol AS6 verbundenen Tätigkeit stößt der Programmablauf auf das Sendesymbol SS1. Durch Sendesymbole werden Nachrichten verschickt. Nach dem Abschicken der Nachricht, dargestellt durch das Sendesymbol SS1, geht der Programmablauf in den Endknoten EK1 und beendet sich. Activity-Diagramme können aber auch als permanent laufende prozesse modelliert werden.

Durch solche Activity-Diagramme werden Prozesse beschrieben, die das Verhalten von Teileinheiten für Softwarelösungen, insbesondere MES-Lösungen, darstellen. Eine Lösung für ein MES-System besteht üblicherweise aus sehr vielen solcher Prozessen, die dann für sich einzeln als Acitivity-Diagramm beschrieben sind und die aber untereinander asynchron durch den Nachrichtenaustausch über Sende- und Empfangssymbole kommunizieren. Dadurch entsteht eine lose Kopplung solcher Prozesse. Durch diese lose Kopplung können die einzelnen Prozesse einer MES-Lösung separat und mehr oder wenig unabhängig voneinander erstellt werden. Die lose Kopplung erlaubt auch eine sehr einfache Wiederverwendung von Prozessen, Teilprozessen oder einer Ansammlung von Prozessen für bestimmte Teilaufgaben in einem MES-System.

Die Darstellung gemäß FIG 4 zeigt ein Beispiel für die Kooperation von State Machines (SM1 - SM4; FIG 5). In FIG 4 sind die Abläufe von zwei State Machines dargestellt. Die State Machine im linken Teil von FIG 4 wird durch das Activity-Diagramm (D1 - D4; FIG 5) mit dem Startknoten SK2, dem Activity-Symbol AS7, dem Sendesymbol SS2 und dem Endknoten EK2 dargestellt. Die State Machine auf der rechten Seite von FIG 4 wird durch das Activity-Diagramm mit dem Startknoten SK3, dem Activity-Symbol AS8, dem Empfangssymbol ES2, dem Activity-Symbol AS9 und dem Endknoten EK3 dargestellt. Durch den gestrichelten Pfeil vom Sendesymbol SS2 des linken Activity-Diagramms zum Empfangssymbol ES2 des rechten Activity-Diagramms wird dargestellt, dass die beiden State Machines lose miteinander gekoppelt sind. Im rechten Activity-Diagramm kann mit dem Programmablauf im Empfangssymbol ES2 erst dann fortgefahren werden, wenn vom linken Activity-Diagramm durch das Sendesymbol SS2 eine Nachricht an das Empfangssymbol ES2 gesendet wurde. Im Empfangssymbol ES2 wird solange mit der Fortführung des Programmablaufs gewartet, bis diese Nachricht eintrifft.

Die Darstellung gemäß FIG 5 zeigt die Aufteilung eines MES-Systems in vier unabhängig laufende Teileinheiten (z.B. einfache oder komplexe Geschäftsprozesse), die jeweils den State Machines SM1 bis SM4 entsprechen. Das Verhalten der State Machines SM1 - SM4 wird jeweils durch die Activity-Diagramme D1 - D4 beschrieben. In der Darstellung gemäß FIG 5 sind diese State Machines SM1 bis SM4 in einer datenflussdiagrammähnlichen Notation am unteren Bildrand dargestellt. Jede dieser State Machines SM1 bis SM4 entspricht einer MES-Anwendung oder MES-Komponente oder MES-Teilkomponente. Das Verhalten jeder dieser Teilkomponenten wird durch Activity-Diagramme D1 - D4 beschrieben, die oberhalb der Datenflussdiagramme dargestellt sind. In den rechteckigen Kästen oberhalb der Datenflussdiagramm-Notation sind jeweils die Activity-Diagramme dargestellt, die den Programmablauf beschreiben, der einer State Machine SM1 - SM4 zugeordnet ist. Diese Zuordnung der Activity-Diagramme zu der jeweiligen State Machine wird durch gestrichelte Pfeile vom jeweiligen Kasten zum jeweiligen Bubble (Kreis, Knoten), der einer State Machine entspricht, dargestellt.

Im linken Activity-Diagramm D1 ist als neues Symbol das Zustandssymbol ZS eingeführt. Damit können z.B. Wartezustände definiert werden. Im nächsten Acticity-Diagramm D2, das der State Machine SM2 zugeordnet ist, ist als weiteres neues Symbol ein Abfragesymbol eingeführt. Dieses Abfragesymbol wird durch eine kleine Raute dargestellt und folgt im Programmablauf der State Machine SM2 auf das Activity-Symbol AS10. In Abhängigkeit von dem Ergebnis einer Abfrage wird entweder der linke oder der rechte Ast durchlaufen. Im erfindungsgemäßen System bzw. Verfahren ist eine Abfrage mit einem Interpreter gekoppelt, der pro Zweig eine Regel aufstellen lässt und der Ast, dessen Regel als erstes zutrifft, wird durchlaufen. In der Darstellung gemäß FIG 5 sind die Flow Chart Bubbles (Kreise, Knoten), die jeweils den State Machines SM1 bis SM4 entsprechen, durch Pfeile miteinander verbunden. Dadurch wird dargestellt, dass auf der Ebene der Datenflussdiagramme (in einer datenflussdiagrammähnlichen Notation dargestellt) Kommunikationsverbindungen zwischen den dazugehörenden Activity-Diagrammen verschaltet werden können. Ein Anwender kann von der Realisierung dieser Verschaltungen abstrahieren. Unabhängig davon, welche Kommunikationsmittel (z.B. MSMQ, HTTP oder DCOM) vorhanden sind, wird entsprechend der Verschaltung eine dazugehörige Verbindung implementiert.

Wenn ein Anwender Activity-Diagramme D1 - D4 modelliert und die asynchrone Kommunikation zwischen den Activity-Diagrammen durch Verschaltungen herstellt, wird parallel dazu ein entsprechendes Laufzeitsystem erstellt. In diesem Laufzeitsystem sind dann die Prozesse und die Verschaltungen sofort ablauffähig und testbar. Die Diagramme können z.B. im Einzelschritt getestet werden oder auch durch rekursive Einzelschritte. Es liegt also ein integriertes Editier- und Laufzeitsystem vor. Ein Anwender, der ein Engineering durchführt, erstellt somit gleichzeitig ein dazugehörendes Laufzeitsystem.

Wenn ein Anwender z.B. eine Verschaltung zwischen zwei State Machines SM1 - SM4 projektiert, dann wird dazu implizit eine Verbindung erstellt, z.B. eine Microsoft Message Queue oder eine HTTP-Verbindung. Auch für die einzelnen Elemente der Activity-Diagramme werden bei ihrer Modellierung automatisch für die Implementierung dazugehörige Implementierungselemente erzeugt. Z.B. als Prozesse und/oder Speicherbereiche im Betriebssystem.

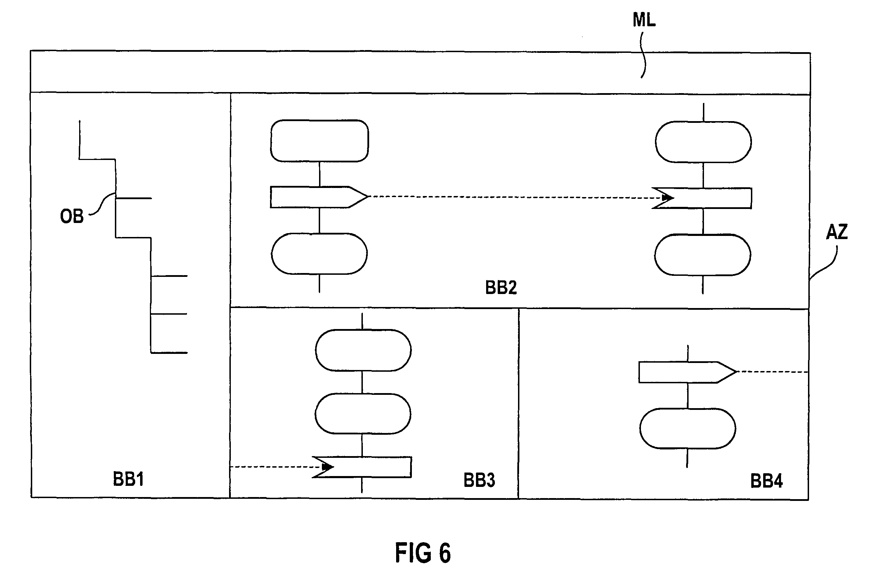

Die Darstellung gemäß FIG 6 zeigt eine Projektieroberfläche für Activity-Diagramme. Auf einer Anzeigevorrichtung AZ (z.B. Monitor oder Display) sind unterschiedliche Bildschirmbereiche BB1 bis BB4 dargestellt. Weiterhin ist am oberen Bildrand eine Menüleiste ML dargestellt, auf der Funktionsknöpfe hinterlegt sind, die über Eingabehilfsmittel wie z.B. eine Maus oder Keyboard angewählt werden können. In der Menüleiste ML können auch die Symbole der Activity-Diagramme vorhanden sein, die dann mit einem drag&drop-Mechanismus auf die entsprechenden Bildschirmbereiche gezogen werden können. In einem Bildschirmbereich BB2 bis BB4 können jeweils ein Activity-Diagramm oder mehrere dargestellt werden. Der Bildschirmbereich BB1 zeigt stilistisch in explorerähnlicher Notation einen Objektbaum OB, der das zugrunde liegende Softwaresystem (z.B. ein Rahmenprogramm, Framework) repräsentiert. Über drag&drop-Mechanismen können Elemente des Objektbaumes OB mit Activity-Diagrammen verbunden werden. D.h., Objekte oder Elemente des Objektbaumes OB werden mit Activity-Diagrammen, die einen Ablauf repräsentieren, hinterlegt. Verschaltungen zwischen Activity-Diagrammen können über Datenflussdiagramme erfolgen, wie in FIG 5 dargestellt. Eine weitere Möglichkeit der Verschaltung geschieht über so genannte Projektiermasken, die den Sende- und Empfangssymbolen der Activity-Diagramme zugeordnet sind. Durch diese Projektiermasken werden durch einen Anwender die zugehörenden Empfangs- bzw. Sendesymbole in den jeweiligen Diagrammen ausgewählt. Weiterhin wird über die Projektiermasken festgelegt, welche Nachrichten ausgetauscht werden und von welchem Typ (z.B. integer, real oder auch vom Anwender selbst definierte Typen) diese Nachrichten sind. Verschaltungen können aber auch auf der Ebene der Objektbäume OB erfolgen. Auch dies via drag&drop-Mechanismen.

Ein Anwender hat somit eine mächtige Projektierungsumgebung. Beim Erstellen einer Projektierung, d.h. beim Modellieren von Activity-Programmen werden dazu automatisch ein dazugehöriges Laufzeitsystem erstellt, in dem die Activity-Diagramme ablaufen. Die Activity-Diagramme sind für sich autark und unabhängig erstellbar. Sie laufen dann sequentiell und synchron ab, aber sie kommunizieren asynchron. Durch diese lose Kopplung lassen sich insbesondere MES-Systeme sehr leicht modellieren und realisieren.

In einem anschließenden Deployment werden die Activity-Diagramme bzw. die State Machines (SM1 - SM4; FIG 5) auf Rechner verteilt, in denen sie auch physikalisch ablaufen. Es ist z.B. möglich, dass ein Server mehr als nur ein Activity-Diagramm enthält. Durch ein geeignetes Deployment wird z.B. eine ausgeglichene Lastverteilung erreicht.

Durch die Erfindung wird ein Anwender in mehreren Phasen unterstützt. Er wird als erstes in der Phase der Geschäftsprozessfindung unterstützt, d.h. bei der Modellierung seines Geschäftsprozesses. Durch die automatische Erstellung eines dazugehörenden Laufzeitsystems wird ein Anwender weiterhin unterstützt, einen gefundenen Geschäftsprozess in eine IT-Lösung einzubringen. Dies geschieht automatisch und ohne Designbruch. In einer dritten Phase kann ein Anwender einen definierten Geschäftsprozess beobachten und kontrollieren. Dieses System ist somit auch zum Testen einsetzbar. Durch eine geeignete Visualisierung, z.B. Graphik und Farbeinsatz, kann das System auch mit einer Animation hinterlegt werden.

Zusammenfassend betrifft die Erfindung ein System und ein Verfahren zur Modellierung und Realisierung von Geschäftsprozessen in MES-Systemen (Manufacturing Execution Systems) oder Fabrikationsteuerungssystemen durch eine Menge von unabhängig agierenden Prozessen, die mittels Zustands- oder Ablaufautomaten und zwischengeschalteten asynchronen Verbindungen beschrieben werden. Diese Prozesse können unabhängig voneinander auf mehrere Rechner aufgeteilt werden (Deployment) und sie kommunizieren miteinander asynchron. Die Modellierung der Ablaufautomaten erfolgt durch Activity- und Data Flow-Diagramme gemäß UML-Darstellung. Eine Eigenschaft des erfindungsgemäßen Systems bzw. Verfahrens ist, dass diese Prozesse sofort ablauffähig und testbar sind. Über Wrapper bzw. Adapter können externe Softwaresysteme integriert werden.

Das oben beschriebene erfindungsgemäße System bzw. Verfahren lässt sich als Computerprogramm in dafür bekannten Sprachen implementieren. Ein derartig implementiertes Computerprogramm kann in ebenfalls bekannter Weise über elektronische Datenwege, aber auch auf Datenträgern (z.B. Computerprogrammprodukten) abgespeichert und transportiert werden.

## Patentansprüche

1. System zur Projektierung von MES-Lösungen, mit mindestens einer Rechnereinheit (PIW1) und/oder mit mindestens einer Anzeigevorrichtung (AZ),
bei dem
a) Activity-Diagramme (D1-D4) zur sequenziellen Beschreibung von das Verhalten von Teileinheiten von Softwareanwendungen (A1-A3) darstellende Prozesse,
b) Mittel zum Verschalten der Activity-Diagramme (D1-D4) für eine asynchrone Kommunikation zwischen Activity-Diagrammen (D1-D4) untereinander und/oder zwischen Activity-Diagrammen (D1-D4) und ihrer Umgebung und
c) ein aus den Verschaltungen der Activity-Diagramme (D1-D4) generierbares Laufzeitsystem, wobei jedes Activity-Diagramm (D1-D4) durch eine State Machine (SM1-SM4) abgebildet ist, vorgesehen sind.

2. System nach Anspruch 1,
**dadurch gekennzeichnet,**
**dass** die Realisierung der Verschaltungen in einem Framework (IF) mit Kommunikationsmitteln erfolgt.

3. System nach Anspruch 1 oder 2,
**dadurch gekennzeichnet,**
**dass** die Mittel zur Verschaltung der Activity-Diagramme (D1-D4) als Dataflow-Diagramm ausgebildet sind, wobei ein Knoten des Dataflow-Diagramms einem Activity-Diagramm (D1-D4) entspricht.

4. System nach Anspruch 1 oder 2,
**dadurch gekennzeichnet,**
**dass** die Mittel zur Verschaltung der Activity-Diagramme (D1-D4) als Masken zur Projektierung von Kommunikationselementen (ES1-ES8, SS1-SS8) der Activity-Diagramme vorgesehen sind,
wobei ein Kommunikationselement mithilfe einer Maske (ES1-ES8, SS1-SS8) projektiert wird.

5. System nach einem der Ansprüche 1 bis 4,
**dadurch gekennzeichnet,**
**dass** die Activity-Diagramme (D1 - D4) Zustandslogik und/oder Controlllogik und/oder Unterprogramme enthalten.

6. System nach einem der Ansprüche 1 bis 5,
**dadurch gekennzeichnet,**
**dass** die State Machines(SM1 - SM4) auf einen oder mehrere Rechner aufteilbar sind.

7. System nach einem der Ansprüche 1 bis 6,
**dadurch gekennzeichnet,**
**dass** durch Wrapper und/oder Adapter (AD1 - AD3) Fremdsysteme ankoppelbar sind.

8. Verfahren zur Projektierung von MES-Lösungen, mit mindestens einer Rechnereinheit (PIW1) und/oder mit mindestens einer Anzeigevorrichtung (AZ),
bei dem
a) Activity-Diagramme (D1-D4) das Verhalten von Teileinheiten von Softwareanwendungen (A1-A3) darstellenden Prozessen sequenziell beschreiben,
b) die Activity-Diagramme (D1-D4) für eine asynchrone Kommunikation zwischen Activity-Diagrammen (D1-D4) untereinander und/oder zwischen Activity-Diagrammen (D1-D4) und ihrer Umgebung verschaltet werden und
c) ein Laufzeitsystem aus den Verschaltungen der Activity-Diagramme (D1-D4) generiert wird, wobei jedes Activity-Diagramm (D1-D4) durch eine State Machine (SM1-SM4) abgebildet ist.

9. Verfahren nach Anspruch 8,
**dadurch gekennzeichnet,**
**dass** die Realisierung der Verschaltungen in einem Framework (IF) mit Kommunikationsmitteln erfolgt.

10. Verfahren nach Anspruch 8 oder 9,
**dadurch gekennzeichnet,**
**dass** die Activity-Diagramme (D1-D4) durch ein Dataflow-Diagramm verschaltet werden, wobei ein Knoten des Dataflow-Diagramms einem Activity-Diagramm (D1-D4) entspricht.

11. Verfahren nach Anspruch 8 oder 9,
**dadurch gekennzeichnet,**
**dass** die Activity-Diagramme (D1-D4) mittels Masken zur Projektierung von Kommunikationselementen (ES1-ES8, SS1-SS8) der Activity-Diagramme verschaltet werden, wobei ein Kommunikationselement mithilfe einer Maske (ES1-ES8, SS1-SS8) projektiert wird.

12. Verfahren nach einem der Ansprüche 8 bis 11,
**dadurch gekennzeichnet,**
**dass** die Activity-Diagramme (D1 - D4) Zustandslogik und/oder Controlllogik und/oder Mittel für Verfeinerungen enthalten.

13. Verfahren nach einem der Ansprüche 8 bis 12,
**dadurch gekennzeichnet, dass** die State Machines (SM1 - SM4) auf einen oder mehrere Rechner aufgeteilt werden.

14. Verfahren nach einem der Ansprüche 8 bis 13,
**dadurch gekennzeichnet, dass** durch Wrapper und/oder Adapter (AD1 - AD3) Fremdsysteme integriert werden.

15. Computerprogramm, das ein Verfahren nach einem der Ansprüche 8 bis 14 implementiert.

16. Datenträger, auf dem ein Computerprogramm nach Anspruch 15 gespeichert ist.

17. Datenverarbeitungseinrichtung (PIW1) auf der ein Computerprogramm nach Anspruch 16 installiert ist.

## Claims

1. System for configuring MES solutions, with at least one computer unit (PIW1) and/or with at least one display device (AZ),
wherein
a) activity diagrams (D1-D4) are provided for the sequential description of processes representing the response of sub-units of software applications (A1-A3),
b) means are provided for switching the activity diagrams (D1-D4) for asynchronous communication between activity diagrams (D1-D4) among themselves and/or between activity diagrams (D1-D4) and their environment and
c) a runtime system that can be generated from the switching of the activity diagrams (D1-D4) is provided, each activity diagram (D1-D4) being mapped by a state machine (SM1-SM4).

2. System according to claim 1,
**characterised in that**
the switches are executed in a framework (IF) with communication means.

3. System according to claim 1 or 2,
**characterised in that**
the means for switching the activity diagrams (D1-D4) are configured as data flow diagrams, with a node of the data flow diagram corresponding to an activity diagram (D1-D4).

4. System according to claim 1 or 2,
**characterised in that**
the means for switching the activity diagrams (D1-D4) are provided as masks for configuring communication elements (ES1-ES8, SS1-SS8) of the activity diagrams, with a communication element being configured with the aid of a mask (ES1-ES8, SS1-SS8).

5. System according to one of claims 1 to 4,
**characterised in that**
the activity diagrams (D1 - D4) contain status logic and/or control logic and/or sub-programmes.

6. System according to one of claims 1 to 5,
**characterised in that**
the state machines (SM1 - SM4) can be allocated to one or more computers.

7. System according to one of claims 1 to 6,
**characterised in that**
external systems can be linked by means of wrappers and/or adapters (AD1 - AD3).

8. Method for configuring MES solutions, with at least one computer unit (PIW1) and/or with at least one display device (AZ),
wherein
a) activity diagrams (D1-D4) describe processes representing the response of sub-units of software applications (A1-A3) in a sequential manner,
b) the activity diagrams (D1-D4) are switched for asynchronous communication between activity diagrams (D1-D4) among themselves and/or between activity diagrams (D1-D4) and their environment and
c) a runtime system is generated from the switching of the activity diagrams (D1-D4) is provided, with each activity diagram (D1-D4) being mapped by a state machine (SM1-SM4).

9. Method according to claim 8,
**characterised in that**
the switches are executed in a framework (IF) with communication means.

10. Method according to claim 8 or 9,
**characterised in that**
the activity diagrams (D1-D4) are switched by a data flow diagram, with a node of the data flow diagram corresponding to an activity diagram (D1-D4.).

11. Method according to claim 8 or 9,
**characterised in that**
the activity diagrams (D1-D4) are switched by means of masks to configure communication elements (ES1-ES8, SS1-SS8) of the activity diagrams, with a communication element being configured with the aid of a mask (ES1-ES8, SS1-SS8).

12. Method according to one of claims 8 to 11,
**characterised in that**
the activity diagrams (D1 - D4) contain status logic and/or control logic and/or refinement means.

13. Method according to one of claims 8 to 12,
**characterised in that**
the state machines (SM1 - SM4) are allocated to one or more computers.

14. Method according to one of claims 8 to 13,
**characterised in that**
external systems are integrated by means of wrappers and/or adapters (AD1 - AD3).

15. Computer programme, which implements a method according to one of claims 8 to 14.

16. Data medium, on which a computer programme according to claim 15 is stored.

17. Data processing facility (PIW1), on which a computer programme according to claim 16 is installed.

## Revendications

1. Système pour faire des projets de solutions MES, ayant au moins une unité d'ordinateur (PIW1) et/ou au moins un dispositif de présentation (AZ) et dans lequel il est prévu
a) des diagrammes d'activité (D1 à D4) permettant de décrire séquentiellement des processus représentant le comportement de sous-unités d'applications logicielles (A1 à A3),
b) des moyens permettant de connecter les diagrammes d'activité (D1 à D4) afin d'établir une communication asynchrone entre les diagrammes d'activité (D1 à D4) entre eux et/ou entre les diagrammes d'activité (D1 à D4) et leur environnement et
c) un système d'exécution pouvant être généré à partir des connexions des diagrammes d'activité (D1 à D4), chaque diagramme d'activité (D1 à D4) étant représenté par un automate fini (State Machine) (SM1 à SM4).

2. Système selon la revendication 1, **caractérisé en ce que** l'établissement des connexions est effectué dans un ensemble structuré (Framework) (IF) comportant des moyens de communication.

3. Système selon la revendication 1 ou 2, **caractérisé en ce que** les moyens permettant de connecter les diagrammes d'activité (D1 à D4) sont conformés en diagramme de flux de données, un noeud du diagramme de flux de données correspondant à un diagramme d'activité (D1 à D4).

4. Système selon la revendication 1 ou 2, **caractérisé en ce que** les moyens permettant de connecter les diagrammes d'activité (D1 à D4) sont prévus sous la forme de masques permettant de faire des projets des éléments de communication (ES1 à ES8, SS1 à SS8) des diagrammes d'activité, un élément de communication étant projeté à l'aide d'un masque (ES1 à ES8, SS1 à SS8).

5. Système selon l'une des revendications 1 à 4, **caractérisé en ce que** les diagrammes d'activité (D1 à D4) contiennent une logique d'état et/ou une logique de commande et/ou des sous-programmes.

6. Système selon l'une des revendications 1 à 5, **caractérisé en ce que** les automates finis (State Machines) (SM1 à SM4) peuvent être répartis sur un ou plusieurs ordinateurs.

7. Système selon l'une des revendications 1 à 6, **caractérisé en ce que** des systèmes extérieurs peuvent être couplés par un programme d'enveloppe (Wrapper) et/ou un adaptateur (AD1 à AD3).

8. Procédé pour faire des projets de solutions MES avec au moins une unité d'ordinateur (PIW1) et/ou au moins un dispositif de présentation (AZ) et dans lequel
a) des diagrammes d'activité (D1 à D4) décrivent séquentiellement des processus représentant le comportement de sous-unités d'applications logicielles (A1 à A3),
b) les diagrammes d'activité (D1 à D4) sont connectés afin d'établir une communication asynchrone entre les diagrammes d'activité (D1 à D4) entre eux et/ou entre les diagrammes d'activité (D1 à D4) et leur environnement et
c) un système d'exécution est généré à partir des connexions des diagrammes d'activité (D1 à D4), chaque diagramme d'activité (D1 à D4.) étant représenté par un automate fini (State Machine) (SM1 à SM4).

9. Procédé selon la revendication 8, **caractérisé en ce que** l'établissement des connexions est effectué dans un ensemble structuré (Framework) (IF) comportant des moyens de communication.

10. Procédé selon la revendication 8 ou 9, **caractérisé en ce que** les diagrammes d'activité (D1 à D4) sont connectés au moyens d'un diagramme de flux de données, un noeud du diagramme de flux de données correspondant à un diagramme d'activité (D1 à D4).

11. Procédé selon la revendication 8 ou 9, **caractérisé en ce que** les diagrammes d'activité (D1 à D4) sont connectés au moyens de masques permettant de projeter des éléments de communication (ES1 à ES8, SS1 à SS8) des diagrammes d'activité, un élément de communication étant projeté à l'aide d'un masque (ES1 à ES8, SS1 à SS8).

12. Procédé selon l'une des revendications 8 à 11, **caractérisé en ce que** les diagrammes d'activité (D1 à D4) contiennent une logique d'état et/ou une logique de commande et/ou des moyens d'affinement.

13. Procédé selon l'une des revendications 8 à 12, **caractérisé en ce que** les automates finis (State Machines) (SM1 à SM4) sont réparties sur un ou plusieurs ordinateurs.

14. Procédé selon l'une des revendications 8 à 13, **caractérisé en ce que** des systèmes extérieurs sont intégrés par le biais d'un programme d'enveloppe (Wrapper) et/ou d'un adaptateur (AD1 à AD3).

15. Programme informatique qui met en oeuvre un procédé selon l'une des revendications 8 à 14.

16. Support de données sur lequel est mémorisé un programme informatique selon la revendication 15.

17. Dispositif informatique (PIW1) sur lequel est installé un programme informatique selon la revendication 16.
